# EUROPÄISCHE PATENTSCHRIFT

(11) **EP 3 986 812 B1**
(45) Veröffentlichungstag und Bekanntmachung des Hinweises auf die Patenterteilung: **31.05.2023**
(21) Anmeldenummer: 20753281.3
(22) Anmeldetag: 26.05.2020
(51) Int. Cl.: B65G 23/44, B65G 43/02

(54) **KETTENKRAFTMESSUNG AN KETTENFÖRDERERN**
MEASURING A CHAIN FORCE ON CHAIN CONVEYORS
MESURE DE LA FORCE D'UNE CHAÎNE SUR DES TRANSPORTEURS À CHAÎNES

(30) Priorität: 18.06.2019 DE 102019116534
(43) Veröffentlichungstag der Anmeldung: 27.04.2022
(73) Patentinhaber: Thiele GmbH & Co. KG, 58640 Iserlohn (DE)
(72) Erfinder: NORPOTH, Bernhard, 45309 Essen (DE)
(74) Vertreter: Osterhoff, Utz
(86) Internationale Anmeldenummer: PCT/DE2020/100446
(87) Internationale Veröffentlichungsnummer: WO 2020/253905

(56) Entgegenhaltungen:
- EP-A1- 2 881 720
- EP-A1- 3 539 906
- WO-A1-2007/012796
- WO-A1-2010/049082
- WO-A1-2018/169920
- CN-A- 109 625 791

## Beschreibung

Die vorliegende Erfindung betrifft ein Verfahren zum Vorspannen eines Kettenförderers mit mindestens einem Kettenrad gemäß den Merkmalen im Oberbegriff von Anspruch 1.

Aus dem Stand der Technik sind Kettenförderer bekannt. Diese weisen zumindest ein Kettenrad, bevorzugt an jeweils einem Ende ein Kettenrad auf. Die Kettenräder können auch als Umlenkräder bezeichnet werden. Zwischen den Kettenrädern verläuft die Kette. An der Kette selbst sind Mitnahmemittel, beispielsweise Kratzer oder ähnliches angebracht, um ein zu beförderndes Gut entlang der Förderstrecke zu bewegen. Solche Kettenförderer werden unter anderem insbesondere in der Bergbautechnik eingesetzt. Sie können jedoch auch zum Fördern von Schüttgut oder anderen Materialien Übertage an Land oder auch in sonstigen Einsatzgebieten verwendet werden.

Hierbei ist für den effizienten Betrieb und zur Verringerung des beim Umlauf und auch beim Lauf in der Förderstrecke auftretenden Verschleißes die Vorspannkraft eines solchen Systems wichtig. Nach einer ersten Installation treten während des Betriebs verschiedene Störfaktoren auf. Beispielsweise tritt abrasiver Verschleiß und auch eine Teilungslängung der Kette auf. Ebenfalls können thermische Ausdehnungen und/oder für die jeweilige Aufnahmekapazität des zu fördernden Gutes unterschiedliche Vorspannkräfte des Kettenstranges eines Kettenförderers bedingen.

Die kontinuierliche Erfassung der Kettenkräfte sowie die drahtlose Übertragung zur Nutzung dieser Daten um einen permanenten Regelkreis für die Vorspannkraft des Spannsystems zu ermöglichen, scheint in der Theorie technisch möglich. In der Praxis treten jedoch wesentliche Einschränkungen auf, welche beispielsweise in nur geringer Reichweite der drahtlos Übertragung, bedingt ist. Auch ist hier in Bezug auf die Einsatzdauer eine nur geringe Batteriekapazität bei aktiven Messmodulen und Drahtlosübertragungsmodulen möglich.

Beispielsweise ist aus der DE 10 2012 112 947 B3 ein Kettenglied bekannt, in welchem ein Dehnungsmessstreifen eingesetzt ist.

Aus der DE 11 2013 005 479 C5 ist ein Kettenförderer bekannt, bei dem die Zugkraft in dem Kettenstrang mit Hilfe einer Regeleinrichtung eingestellt wird.

Weiterhin ist aus der EP 2 881 720 A1 ein Verfahren zum Einstellen der Vorspannkraft einer Kette bekannt, bei dem mit Hilfe einer Messvorrichtung die Kettenspannung drahtlos an eine Kontrolleinheit übermittelt wird, die mit Hilfe einer hydraulischen Spannvorrichtung die Kettenspannung einstellt.

Aufgabe der vorliegenden Erfindung ist es, eine Möglichkeit aufzuzeigen, die Vorspannkraft eines Kettenförderers effizient in Abhängigkeit der auftretenden Belastung und/oder der sich einstellenden Betriebsbedingungen einzustellen.

Die vorgenannte Aufgabe wird erfindungsgemäß mit einem Verfahren zum Vorspannen eines Kettenförderers mit den Merkmalen im Patentanspruch 1 gelöst. Vorteilhafte Ausgestaltungsvarianten sind Gegenstand der abhängigen Ansprüche sowie der nachfolgenden Beschreibung und den Figurendarstellungen.

Das Verfahren zum Vorspannen eines Kettenförderers sieht vor, dass der Kettenförderer mindestens einen Kettenstrang aufweist, welcher über mindestens ein Kettenrad umgelenkt wird. Bevorzugt wird der Kettenstrang über zwei an gegenüberliegenden Enden angeordnete Kettenräder umgelenkt. In dem Kettenstrang ist mindestens ein Messmodul integriert. Das Messmodul kann die auftretende Kettenkraft, insbesondere Vorspannkraft messen, beispielsweise über einen Dehnungsmessstreifen, und die Daten als Signal drahtlos an eine außerhalb des Kettenstranges angeordnete Kommunikationseinheit übertragen. Die Kommunikationseinheit kann mobil ausgebildet sein, jedoch auch ortsfest angeordnet sein. Die Vorspannkraft des Kettenstranges wird dann in Abhängigkeit der von dem Messmodul gesammelten und drahtlos übertragenen Daten eingestellt.

Das Verfahren kann auch an einem Kettenförderer, der beispielsweise mit zwei oder mehr Kettensträngen ausgebildet ist, ausgeführt werden.

Mit dem erfindungsgemäßen Verfahren können bereits installierte Kettenförderer nachgerüstet werden, jedoch auch neu zu installierende Kettenförderer ausgerüstet werden. In dem Kettenstrang wird ein drei Glieder Kettenstrang angeordnet. Hierzu kann ein mittleres Kettenglied ein Messmodul aufweisen. Bevorzugt verfügt dieses über einen mittleren Steg, in welchem das Messmodul, ein Dehnmessstreifen mit einem Energiespeicher und einem Drahtlosübertragungsmodul eingesetzt ist. Das Messmodul wird dann bevorzugt durch ein Vergussharz gegenüber äußeren Einflüssen, wie Verschmutzung oder Witterungseinflüssen, abgekapselt bzw. abgedichtet. Damit nunmehr der drei Glieder Kettenstrang mit dem Messmodul in dem Kettenstrang angeordnet werden kann, sind zwei äußere Kettenglieder in Form eines Kettenschlosses bzw. Kettenblockschlosses ausgebildet, mit denen das Kettenglied mit Messmodul in den Kettenstrang integriert werden kann.

Der Aufbau des Kettengliedes, welches mit dem Messmodul ausgestattet ist, ist insbesondere derart gestaltet, dass ein Energiespeicher in Form einer Batterie auswechselbar ist. Hierzu kann beispielsweise das Vergussharz partiell geöffnet werden, die Batterie ausgetauscht und anschließend die Öffnung wieder durch ein Vergussharz geschlossen werden. Auch wäre es im Rahmen der Erfindung vorstellbar, hier eine reversible Dichtung einzusetzen, beispielsweise aus Gummiwerkstoff, insbesondere einen abgedichteten Deckel.

Die Drahtlosübertragung des Messmoduls kann beispielsweise per Funk erfolgen, jedoch auch per WLAN, Bluetooth oder anderen Drahtlosübertragungsmöglichkeiten.

Die Messeinrichtung umfasst somit ebenfalls ein Drahtlosübertragungsmodul und insbesondere einen Energiespeicher, bevorzugt eine Batterie.

Damit nunmehr die von dem Messmodul aufgenommen Daten empfangen und ausgewertet werden können, ist bevorzugt eine ortsfeste Kommunikationseinheit vorgesehen und/oder eine mobile Kommunikationseinheit. Die ortsfeste Kommunikationseinheit kann alternativ oder auch ergänzend zu der mobilen Kommunikationseinheit eingesetzt sein.

Die ortsfeste Kommunikationseinheit ist insbesondere im Bereich der Umkehr des Kettenstranges mithin im Bereich eines Kettenrades angeordnet. Dies bedeutet, dass zumindest ein Empfängermodul der ortsfesten Kommunikationseinheit im Bereich der Umkehre mithin des Kettenrades angeordnet ist. Damit können besonders bevorzugt periodische oder auch dauerhafte Messungen vorgenommen werden.

Insbesondere können periodische Messungen derart vorgenommen werden, dass ein Messmodul bei Passieren des Kettenrades aktuelle Daten misst und an die Kommunikationseinheit weitergibt. Es können auch mehrere Kommunikationseinheiten ortsfest angeordnet sein, die insbesondere jeweils für sich mit dem Messmodul kommunizieren können, jedoch auch untereinander die Daten austauschen bzw. übertragen werden können.

An die Kommunikationseinheit selber können weitere Computereinrichtungen sowie Aufzeichnungssysteme angeschlossen sein. Hierdurch ist es beispielsweise möglich, zum einen die gemessenen Werte des Kettenstranges zu empfangen. Ferner können diese dann im Zuge einer Überwachung oder Qualitätssicherung aufgezeichnet werden oder auch mit einem Steuer- oder Leitstand verbunden sein.

Auch kann die Kommunikationseinheit mit einer Vorspanneinrichtung bzw. einer Steuerung bzw. Regelung der Vorspanneinrichtung verbunden sein, so dass ein Steuerungskreis mit manuellem Eingriff oder auch ein geschlossener Regelkreis zur fortwährenden Einstellung der Vorspannkraft realisiert ist.

Alternativ und ergänzend kann eine mobile Kommunikationseinheit vorgesehen sein, welche beispielsweise als Handgerät ausgebildet ist. Insbesondere in Form eines PDAs oder auch eines Smartphones oder Tablets. Die mobile Kommunikationseinheit weist ebenfalls eine Empfangseinheit auf, welche mit einem Messmodul kommunizieren kann.

Wird der Betrieb des Kettenförderers unterbrochen, kann die mobile Kommunikationseinheit in die Nähe des Messmoduls gebracht werden und somit Daten austauschen. Dies könnte auch im Betrieb des Kettenförderers stattfinden, beispielsweise wird die mobile Kommunikationseinheit in einem Senderaum des Messmoduls mitgeführt, um aufgezeichnete und gesendete Daten von diesem zu empfangen. Die mobile Kommunikationseinheit kann somit insbesondere das Messmodul aktivieren und dient somit auch als Sender und beispielsweise im Rahmen der Qualitäts- und/oder Verschleißkontrolle strichprobenartige Messungen durchführen. Die mobile Kommunikationseinheit kann wiederum ebenfalls mit einer Regelung bzw. Steuerung der Vorspanneinrichtung kommunizieren.

Jede der zuvor genannten Kommunikationseinheiten weist besonders bevorzugt ein Gehäuse mit eingebauter Steuerungs- und Auswertelektronik auf, zumindest eine Empfangseinrichtung, beispielsweise eine Antenne, eine Energieversorgung, insbesondere eine Batterie. Weiterhin bevorzugt kann die Kommunikationseinheit ein Display und/oder Eingabetasten aufweisen. Auch kann die jeweilige Kommunikationseinheit Signale an das Messmodul senden, beispielsweise Aktivierungssignale.

Die Messmodule selbst weisen eine Messeinheit auf, mindestens einen Dehnungsmessstreifen sowie eine Drahtlosübertragungseinheit und im Falle eines aktiven Messmoduls einen Energiespeicher, insbesondere eine Batterie.

Die Messmodule werden nicht nur in eine Standby-Funktion, sondern in eine Tiefschlaffunktion überführt.

Per Drahtloskommunikation, beispielsweise per Funk,kann ein jeweiliges Messmodul aktiviert werden. Dies bietet erfindungsgemäß den Vorteil, dass der Energiespeicher auch über einen längeren Einsatzzeitraum, beispielsweise mehrere Monate oder Jahre nutzbar ist. Die gemessenen Werte können dann als Daten bereitgestellt werden und beispielsweise über ein Signal drahtlos übertragen werden. Die Begriffe Daten, Messwerte und Signale sind dabei im Rahmen der Erfindung synonym zu verwenden in dem Sinne, dass Werte gemessen werden, in Daten umgewandelt werden und die Daten über Signale übertragen werden, wobei die Signale wiederum ausgewertet werden zu Daten.

Nunmehr können die eigentlichen Messungen und damit das Einstellungs- bzw. Regelungsverfahren für die Vorspannkraft wie folgt durchgeführt werden.

Dies kann periodisch oder kontinuierlich erfolgen, jedoch auch bedarfsgerichtet. Auch können die vorbeschriebenen Messmethoden jeweils für sich ergänzend durchgeführt werden.

Bei der bedarfsgesteuerten Messung besteht die Notwendigkeit, eine Messung durchzuführen, beispielsweise bei vorgegebenen Einsatzzeiten, Wartungsintervallen, beispielsweise optischer Einschätzung von vermutetem Verschleiß. Hierzu kann der Kettenförderer angehalten werden und mittels der mobilen Kommunikationseinheit ein entsprechender bedarfsgesteuerter Modus, beispielsweise Modus 1, gewählt werden. In der Kommunikationseinheit können dann verschiedene Parameter eingestellt werden, beispielsweise die Messfrequenz, Messdauer oder ähnliche.

Das mindestens eine Messmodul wird aus einem Tiefschlafmodus durch die Kommunikationseinheit aktiviert. Beispielsweise für einen vorgegebenen Zeitraum kann dann der Kettenförderer in Betrieb genommen werden und die Messung durchgeführt werden. Hierzu gibt es wiederum zwei alternative oder auch sich ergänzende Möglichkeiten. Zum einen können die Messwerte von dem Messmodul aufgezeichnet werden und nach Abschluss des Messvorganges an die Kommunikationseinheit übertragen werden. Es können jedoch auch, dann bevorzugt in Echtzeit, kontinuierlich die Messwerte während des Betriebs an die Kommunikationseinheit übertragen werden. Insbesondere bei erstem Fall wird dann der Kettenförderer angehalten und die Messwerte mittels der mobilen Kommunikationseinheit ausgelesen, gespeichert und aufbereitet. Bei einer Echtzeitübertragung würden die Messwerte an die Kommunikationseinheit übertragen werden. Dies ist insbesondere reichweitenabhängig.

Wesentliche Messwerte können zum Beispiel die Minimal-, Maximal- oder auch Mittelwerte auftretender Kräfte sein. Beispielsweise kann auch die Häufigkeitsverteilung definierter Kräftebereiche sofort angezeigt werden, beispielsweise 20, 40, 60 und 80 Prozent des Maximalwertes.

Die Messwerte können dann mit einem Zeitstempel versehen werden und zur Archivierung und weiteren Auswertung gespeichert bzw. zur Verfügung gestellt werden. Ebenfalls kann die mobile Kommunikationseinheit die Messwerte weiterleiten. Auch kann beispielsweise die mobile Kommunikationseinheit in eine Lade- und Koppelstation eingesetzt werden und die Messwerte dann entsprechend weitergeleitet werden.

Eine weitere Möglichkeit ist eine periodische Messung. Diese dient insbesondere der Einstellung der Vorspannkraft und kann ganz besonders bevorzugt für jeden Umlauf des Kettenstranges erfolgen, beispielsweise jedoch auch für jeden zweiten oder dritten Umlauf. Hierzu wird das Messmodul in einen dafür gesteuerten Modus eingestellt, der beispielsweise Modus 2 genannt wird. Beispielsweise kann diese Aktivierung und Einstellung des Messmoduls über die mobile Kommunikationseinheit erfolgen. Werden mehrere Messmodule in einem Kettenstrang eingesetzt, können pro Umlauf auch mehrere Messungen durchgeführt werden,

Eine erste Sende/Empfangseinheit, beispielsweise eine erste Antenne kann direkt in Umlaufrichtung hinter einem Kettenrad angeordnet sein. Diese Sende/Empfangseinheit sendet ein Signal aus, welches das Messmodul bei Passieren aus dem Tiefschlafmodus aufweckt. Das Messmodul nimmt dann für einen Zeitraum, welcher bevorzugt kleiner als 2 Sekunden, insbesondere kleiner als 1,5 Sekunden und beispielsweise 1 Sekunde beträgt, bei bevorzugt einer geringen Frequenz von beispielsweise 10 bis 100 Hertz, bevorzugt 20 Hertz Messwerte optional inklusive Zeitstempel auf und sendet dann die aufgenommenen Messwerte als Daten an eine ortsfeste Kommunikationseinheit bzw. eine damit verbundene Empfangseinheit. Aufgrund des dann vergangenen Zeitraumes fällt das Messmodul automatisch wieder in den Tiefschlafmodus. Hierdurch wird der Energieverbrauch, insbesondere Stromverbrauch auf ein Minimum reduziert und ein entsprechender Betrieb ist auch über einen Einsatz von mehreren Wochen bzw. Monaten hinaus möglich. Die ortsfeste Kommunikationseinheit führt dann sofort eine Plausibilitätsprüfung der Messwerte durch und verarbeitet diese beispielsweise als Mittelwertbildung. Dadurch ist es möglich, pro vollständigem Umlauf des Kettenstranges, einen sich einstellenden Kraftwert zu ermitteln. Hierüber ist es möglich, dann über eine Vorspanneinrichtung die Vorspannkraft des Kettenstranges zu steuern. Auch können die durch die ortsfeste Kommunikationseinheit verarbeiteten Werte im Zuge eines Regelungskreises die Vorspanneinrichtung direkt ansteuern. Letzterenfalls wird sichergestellt, dass der Kettenstrang unter Berücksichtigung von äußeren Einflüssen und/oder Verschleiß fortwährend eine optimale Vorspannung aufweist, so dass der Wirkungsgrad, mit welchem der Kettenstrang betrieben wird, hoch ist.

Die oben erwähnte Frequenz bezieht sich auf eine Messfrequenz bzw. Abtastrate. Sie gibt die Anzahl der realisierten Messungen in einem festgelegten Zeitintervall an. Im Sinne dieser Erfindung wäre eine niederfrequente Messfrequenz ein Bereich von beispielsweise 10 bis 100 Hertz, eine hochfrequente Messung in einen Bereich von 100 bis 1000 Hertz. Bevorzugte Zeitintervalle, in denen die Messung durchgeführt wird, sind insbesondere 1 bis 10 Sekunden, ganz besonders bevorzugt 3 bis 6 Sekunden. Es hat sich experimentell überraschenderweise gezeigt, dass beispielweise bei einer Messfrequenz von 20 Hertz sichergestellt wird, dass Spannungsspitzen, die in dem Kettenförderer auftreten, sicher erfasst werden. Bei einer Messdauer von beispielsweise 3 Sekunden liegen somit 60 Messwerte vor.

Die gemessenen Werte werden im Rahmen dieser Erfindung als Rohdaten genannt. Wird nunmehr eine höherfrequente Messung durchgeführt, so liegt eine Vielzahl von Rohdaten vor. Wird beispielsweise mit einer Frequenz von 1000 Hertz über einen Zeitraum von 3 Sekunden gemessen, so würden sich 3000 Messwerte ergeben. Dies stellt eine entsprechend hohe Datenmenge dar, die dann drahtlos übertragen werden müsste. Dies bringt jedoch zwei Nachteile mit sich. Zum einen muss eine entsprechende Sendedauer der Messeinrichtung bereitgestellt werden, um die gesammelten Daten drahtlos an die Kommunikationseinrichtung zu übertragen. Da unter Umständen der Kettenförderer während dieser Sendedauer bewegt wird, muss gleichzeitig auch die Reichweite der drahtlos Übertragung vergrößert werden. Beide Punkte wirken sich negativ auf die zur Vefügung stehende Energie aus und führen zu einer schnelleren Batterieentleerung.

Daher ist im Rahmen der Erfindung auch vorgesehen, dass bei Weitergabe von Rohdaten die Frequenz besonders bevorzugt in einen Bereich von 20 bis 50 Hertz liegt. Alternativ oder ergänzend kann das Messmodul derart ausgestattet sein, dass die Rohdaten in dem Messmodul aufbereitet werden. Beispielsweise kann eine Auswertung von Minimal- und Maximalwerten erfolgen. Insbesondere wird ein Durchschnittswert berechnet. Die Rohdatenmenge kann somit deutlich reduziert werden, so dass beispielsweise nur 10 bis 50 Daten übertragen werden. Vorher kann auch noch eine Plausibilitätsprüfung durchgeführt werden, was beispielsweise über einen entsprechenden Filter, insbesondere Tiefpassfilter geschehen kann, so dass gemessene Werte, die unlogisch erscheinen oder außerhalb zu erwartender Messbereiche liegen, direkt ausgefiltert würden. Ist so eine Datenaufbereitung von Rohdaten vorgenommen, so kann erfindungsgemäß nur noch ein geringer Teil an aufbereiteten Daten über die Messeinrichtung gesendet werden und von der Kommunikationseinrichtung empfangen werden. Dadurch kann die zu sendende Datenmenge reduziert werden, so dass der Sendezeitraum geringer ist und auch die zur Sendung benötigte Übertragungszeit verringert wird, weshalb auch gleichzeitig die Sendeleistung bzw. Sendereichweite reduziert werden kann. Damit wird Energie der Batterie eingespart, so dass die Messeinrichtung länger in der Kette ohne Austausch der Batterie verbleiben kann.

Weiterhin bevorzugt wird ein Repeater zum Empfang und Weitergabe der von der Messeinrichtung gesendeten Daten eingesetzt. Dies bietet den Vorteil, dass ein Repeater gerade im untertägigen Bergbau örtlich näher an den Kettenstrang herangebracht werden kann. Die Sendeleistung der Messeinrichtung kann dadurch wiederum reduziert werden, da diese ausschließlich die Daten bis zu dem Repeater übersenden muss. Von dem Repeater können dann die Daten an eine Kommunikationseinrichtung oder beispielsweise auch an eine zweite Antenne weitergeleitet werden. Der Repeater bietet einen weiteren Vorteil. Die von dem Repeater drahtlos übertragenen Daten bzw. die Senderichtung des Repeaters kann gezielt in eine Richtung gerichtet werden. Somit kann eine höhere Reichweite sichergestellt werden. Gleichzeitig kann die Sendeleistung des Repeaters, welcher selbst bevorzugt auch nicht kabelgebunden und mit autaker Batterieversorgung eingesetzt ist, verwendet werden.

Weitere Vorteile, Merkmale, Eigenschaften, Aspekte der vorliegenden Erfindung sind Gegenstand der nachfolgenden Beschreibung. Bevorzugte Ausgestaltungsvarianten werden in den schematischen Figuren dargestellt. Diese dienen dem einfachen Verständnis der Erfindung.

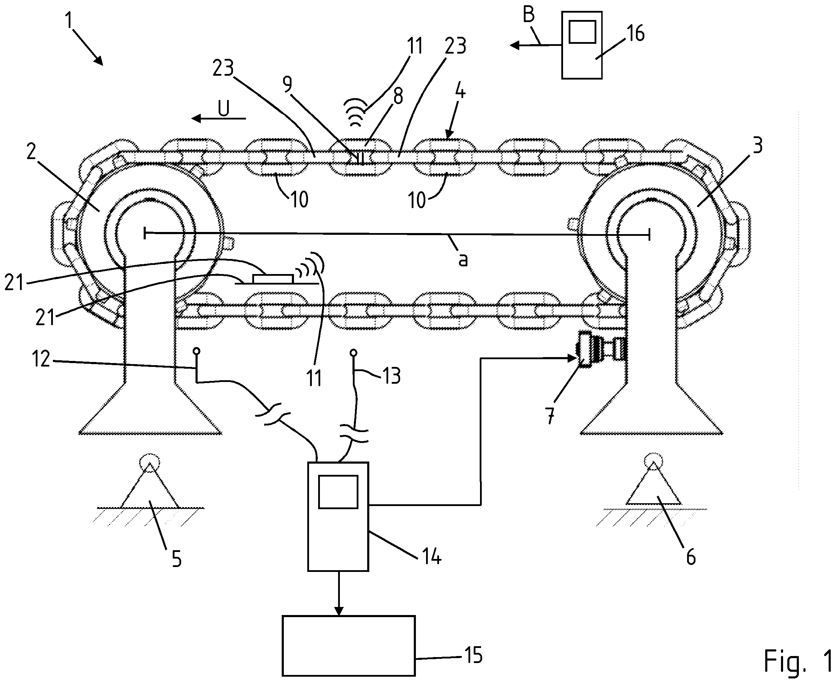

Figur 1 zeigt einen Kettenförderer 1. Dieser weist ein linkes Kettenrad 2 sowie ein rechtes Kettenrad 3 auf. Dazwischen eingespannt ist ein Kettenstrang 4 der in Umlaufrichtung U umläuft. Beispielsweise kann das linke Kettenrad 2 mit einem Festlager 5 angeordnet sein und das rechte Kettenrad 3 mit einem Loslager 6, so dass über eine Vorspannvorrichtung 7 die in einem umlaufenden Kettenstrang 4 eingestellte Vorspannung durch Variation des Abstandes a zwischen den beiden Kettenrädern 2, 3 eingestellt wird. Nunmehr befindet sich in dem Kettenstrang 4 mindestens ein Kettenglied 8, mit einem in dem Kettenglied 8 befindlichen Steg 9. Das Kettenglied 8 ist insbesondere als stehendes Kettenglied 8 ausgebildet. Linksund rechtsseitig des Kettengliedes 8 sind dann jeweils liegende Kettenglieder 23 angeordnet. Insgesamt ergibt sich somit ein drei Glieder Kettenstrang. Die jeweils liegenden Kettenglieder 23 sind dann über Kettenschlösser 10 mit dem Kettenstrang 4 gekoppelt.

An dem Kettenstrang 4 können nicht näher dargestellte Mitnehmer oder ähnliches befestigt sein, so dass der Kettenförderer 1 seine entsprechende Förderfunktion übernimmt, was jedoch zur Vereinfachung nicht dargestellt ist. Der Oberteil des Kettenstranges 4 kann ferner in einer Rinne bzw. in einem Obertrum laufen. Der untere Teil des Kettenstranges 4 kann in einem Untertrum laufen. Dieses ist jedoch aus Vereinfachungsgründen ebenfalls nicht dargestellt.

Erfindungsgemäß kann nunmehr in dem stehenden Kettenglied, insbesondere in dem Steg 9 des stehenden Kettengliedes 8 ein Messmodul angeordnet sein. Dieses Messmodul kann auf Bedarf Daten erfassen und drahtlos übertragen. Damit das Messmodul nicht permanent sendet und somit ein evtl. Energiespeicher in dem Messmodul relativ schnell leer würde, ist vorgesehen, dass bei Passieren des Messmoduls einer ersten Antenne 12, das Messmodul aus einem Standby-Modus, insbesondere einem Tiefschlafmodus, erweckt wird. Es wird dann eine Aufzeichnung der in dem Kettenstrang 4 vorliegenden Kettenkräfte durchgeführt, insbesondere für einen vorgegebenen Zeitraum. Eine in der weiteren Umlaufrichtung U folgende zweite Antenne 13 kann dann bei Passieren dieser, die aufgezeichneten Messwerte, als Daten empfangen und an eine Kommunikationseinrichtung 14, welche beispielsweise insbesondere eine ortsfeste Kommunikationseinrichtung 14 ist, weitergeben. Auch wäre es möglich, dass das Messmodul nach Passieren der zweiten Antenne 13 wieder in den Tiefschlafmodus fällt, beispielsweise durch ein Deaktivierungssignal. Beispielsweise kann die zweite Antenne 13 hierzu ein Deaktivierungssignal aussenden. In diesem Fall würde die Aktivierung des Messmoduls nicht für einen vorgebenen Zeitraum andauern, sondern nur bis zum Passieren der zweiten Antenne 13.

Über die Kommunikationseinrichtung 14 ist es dann möglich, die aufgezeichneten Messwerte beispielsweise an einen nachgeschalteten Leitstand 15 weiterzugeben. Auch ist es möglich, dass die Messwerte aufbereitet, ausgewertet und/oder verarbeitet werden und beispielsweise als direkte Rückführgröße an die Vorspanneinrichtung 7 weitergegeben werden, so dass als Regelungskreis die Vorspannung zwar im Betrieb kontinuierlich, jedoch auf Basis der periodisch gemessenen Kräfte eingestellt wird. Nicht näher dargestellt können auch zwei oder mehr Messmodule in der Länge des Kettenstranges 4 angeordnet sein. Der Abstand a zwischen den zwei Kettenrädern 2, 3 kann bis zu mehrere 100 Meter betragen. Der Abstand zwischen der ersten und der zweiten Antenne 12, 13 kann mehrere Meter betragen. Die Übertragung der Daten an die zweite Antenne 13 findet mit einer geringen Sendereichweite des Messmoduls statt. Dies geht mit einem geringen Energieverbrauch einher. Daher ist es empfehlenswert, dass die Übertragung der Daten nach Aufzeichnung beispielsweise erst an die zweite Antenne 12 erfolgt und nicht schon nach Aktivierung durch die erste Antenne 12 permanent gesendet werden.

Ebenfalls dargestellt ist eine mobile Kommunikationseinrichtung 16. Diese mobile Kommunikationseinrichtung 16 kann zum einen dazu dienen, um induviduell auf die Messmodule einzuwirken, beispielsweise einen jeweiligen Modus in dem Messmodul einzustellen, unabhängig von der Position des Kettenstranges 4. Die mobile Kommunikationseinrichtung 16 kann jedoch auch in Bewegungsrichtung B parallel zum Messmodul mitgeführt werden, um bedarfsgerecht bzw. stichprobenartig Daten von der Messeinrichtung aufzuzeichnen, wenn der Kettenstrang 4 in Betrieb ist.

Ferner ist in Figur 1 ein Repeater 22 angeordnet an einem Rahmen 21. Der Rahmen 21 kann beispielsweise direkt in eine nicht näher dargestellte Rinne, in welcher der Kettenstrang verläuft, integriert sein. Der Repeater 22 kann dann bei Passieren des Messmoduls 20 Daten von dem Messmodul 20 empfangen. Der Repeater 22 kann örtlich sehr nahe an den vorbeigeführten Kettenstrang 4 herangebracht werden, so dass die Sendeleistung vom Messmodul an den Repeater 22 gering ist. Der Repeater 22 selbst überträgt dann die Daten wiederum an einen vorgesehenen Empfänger, beispielsweise an die zweite Antenne 13. Bevorzugt ist insbesondere der Repeater 22 seitlich an einer nicht näher dargestellten Rinne angeordnet. Hier ist es insbesondere möglich, dass bei örtlich gerichteter drahtlos Weiterleitung der Daten von dem Repeater 22 dieser derart angebracht werden kann, dass er nicht von der Rinne bzw. einem Untertrum abgeschirmt wäre.

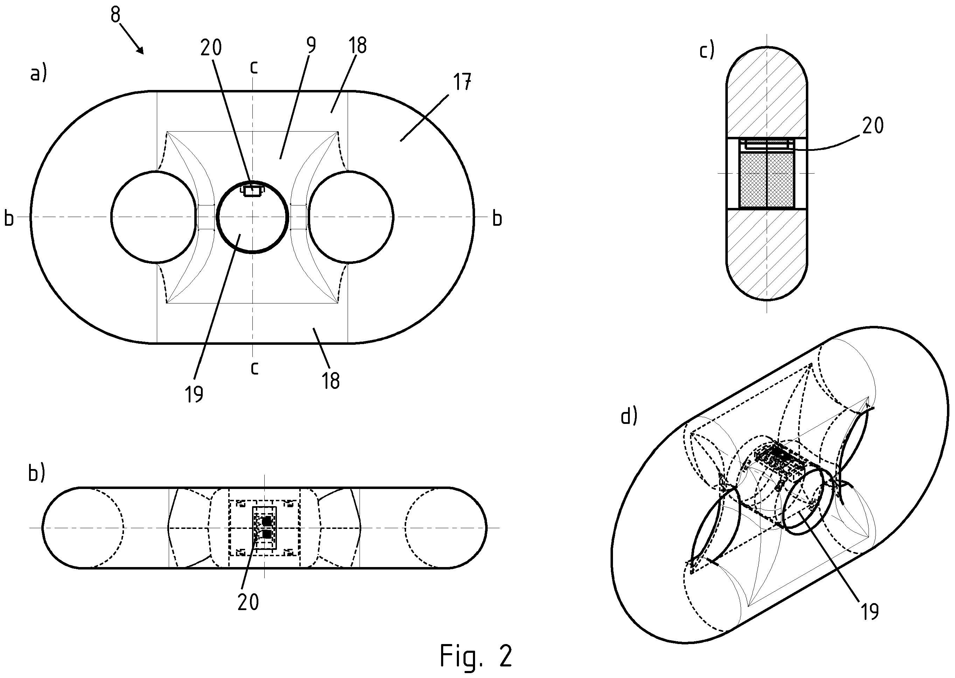

Figur 2a zeigt ein erfindungsgemäßes stehendes Kettenglied 8. Das Kettenglied 8 kann beispielsweise für eine Rundstahlgliederkette ausgebildet sein. Zwischen den zwei Rundungen 17 erstrecken sich dann die Schenkel 18, wobei zwischen den Schenkeln 18 ein vertikaler Steg 9 ausgebildet ist. In dem Steg 9 selber ist eine Montageöffnung 19 vorhanden, wobei in der Montageöffnung 19 ein Messmodul 20 angeordnet ist. Die Montageöffnung 19 kann dann beispielsweise mittels Vergussharz verschlossen werden. Das Messmodul 20 umfasst bevorzugt mindestens einen Dehnungsmessstreifen, eine Übertragungseinheit sowie einen Energiespeicher.

### Bezugszeichen:

- 1 -: Kettenförderer
- 2 -: Kettenrad
- 3 -: Kettenrad
- 4 -: Kettenstrang
- 5 -: Festlager
- 6 -: Loslager
- 7 -: Vorspannvorrichtung
- 8 -: Kettenglied
- 9 -: Steg
- 10-: Kettenschloss
- 11 -: Drahtlosdaten
- 12 -: erste Antenne
- 13 -: zweite Antenne
- 14 -: Kommunikationseinrichtung
- 15 -: Leitstand
- 16 -: mobile Kommunikationseinrichtung
- 17 -: Rundung
- 18 -: Schenkel
- 19 -: Montageöffnung
- 20 -: Messmodul
- 21: Rahmen
- 22: Repeater
- 23: liegendes Kettenglied

- U -: Umlaufrichtung
- a -: Abstand
- B -: Bewegungsrichtung

## Patentansprüche

1. Verfahren zum Vorspannen eines Kettenförderers (1) mit einem Kettenstrang (4), welcher über mindestens ein Kettenrad (2, 3) umgelenkt wird, wobei in dem Kettenstrang (4) mindestens ein Messmodul (20) integriert ist, welches Daten drahtlos an eine außerhalb des Kettenstranges (4) angeordnete Kommunikationseinrichtung (14, 16) überträgt, wobei die Vorspannkraft in Abhängigkeit der von dem Messmodul (20) gesammelten und drahtlos übertragenen Daten eingestellt wird, **dadurch gekennzeichnet, dass** das Messmodul (20) ein Dehnmesstreifen ist, dessen Werte drahtlos an die Kommunikationseinrichtung (14, 16) übertragen werden, wobei das Messmodul (20) sich in einem Tiefschlafmodus befindet und durch ein Signal in einen Aufzeichnungsmodus bzw. Messmodus aktivierbar ist und der Aufzeichnungsmodus nach Beenden des Aktivierungssignals oder nach einem Zeitfenster oder durch ein Deaktivierungssignal deaktiviert wird und das Messmodul (20) wieder in den Tiefschlafmodus übergeht.

2. Verfahren nach Anspruch 1, **dadurch gekennzeichnet, dass** die Messung periodisch oder kontinuierlich oder bedarfsgerichtet durchgeführt wird.

3. Verfahren nach Anspruch 1 oder 2, **dadurch gekennzeichnet, dass** das Messmodul (20) über Funk aktivierbar ist.

4. Verfahren nach einem der vorangehenden Ansprüche, **dadurch gekennzeichnet, dass** das Aktivierungssignal sich in unmittelbarer Nähe des Kettenrades (2, 3) befindet, dergestalt, dass die Messung unmittelbar nach Verlassen des Kettenstranges (4) des Kettenrades (2, 3) durchgeführt wird.

5. Verfahren nach einem der Ansprüche 1 bis 4, **dadurch gekennzeichnet, dass** nach jedem Kettenumlauf des Messmoduls (20) mindestens eine Messung durchgeführt wird.

6. Verfahren nach einem der Ansprüche 1 bis 5, **dadurch gekennzeichnet, dass** die Messwerte genutzt werden, um die Vorspannkraft einzustellen oder dass die Messwerte direkt als Regelgröße genutzt werden, um die Vorspannkraft zu regeln.

7. Verfahren nach einem der Ansprüche 1 bis 6, **dadurch gekennzeichnet, dass** die Messwerte von dem Messmodul (20) an weitere Empfänger gesendet werden oder dass die Messwerte von der Kommunikationseinrichtung (14, 16) an weitere Empfänger geleitet werden.

8. Verfahren nach einem Ansprüche 1 bis 7, **dadurch gekennzeichnet, dass** ein Repeater (22) die Daten von dem Messmodul (20) empfängt und an einen weiteren Empfänger drahtlos weiterleitet, insbesondere an eine Kommunikationseinrichtung (14, 16).

9. Verfahren nach einem der Ansprüche 1 bis 8, **dadurch gekennzeichnet, dass** das Messmodul (20) Rohdaten misst und über eine Aufbereitungseinrichtung und/oder Filterungsmöglichkeit verfügt, dergestalt, dass die Menge der Rohdaten deutlich reduziert wird und die reduzierten Daten dann von dem Messmodul an einen Empfänger, insbesondere ein Kommunikationsmodul weitergeleitet werden.

## Claims

1. Method for pretensioning a chain conveyor (1) using a chain link (4) which is diverted over at least one sprocket wheel (2, 3) wherein in the chain link (4) is integrated at least one measurement module (20) which transmits data wirelessly to a communication device (14, 16) arranged externally to the chain link (4), wherein the pretensioning force is set as a function of the data collected by the measurement module (20) and transmitted wirelessly, **characterised in that** the measurement module (20) is a strain gauge, the values of which are transmitted wirelessly to the communication device (14, 16), wherein the measurement module (20) is in a deep sleep mode and is activatable by means of a signal into a recording mode or measuring mode, and the recording mode is deactivated after an ending of the activating signal or after a period of time for by means of a deactivating signal and the measurement module (20) switches back into the deep sleep mode.

2. Method according to claim 1, **characterised in that** the measurement is carried out periodically or continuously or according to requirements.

3. Method according to claim 1 or 2, **characterised in that** the measurement module (20) can be activated via radio.

4. Method according to any of the preceding claims, **characterised in that** the activating signal is located in the immediate vicinity of the sprocket wheel (2, 3) such that the measurement is carried out immediately after the chain link (4) leaves the sprocket wheel (2, 3).

5. Method according to any of claims 1 to 4, **characterised in that** at least one measurement is carried out following every chain circulation of the measurement module (20).

6. Method according to any of claims 1 to 5, **characterised in that** the measurement values are used for setting the pretensioning force or that the measurement values are used directly as control variables in order to regulate the pretensioning force.

7. Method according to any of claims 1 to 6 **characterised in that** the regiment values are transmitted by the measurement module (20) to further recipients, or that the measurement values are guided by the communication device (14, 16) to further recipients.

8. Method according to any of claims 1 to 7, **characterised in that** a repeater (22) receives the data from the measurement module (20) and forwards them wirelessly to a further recipient, in particular to a communication device (14, 16).

9. Method according to any of claims 1 to 8, **characterised in that** the measurement module (20) measures raw data and has a treatment device and/or filter facility, such that the quantity of the raw data is significantly reduced and the reduced data are then forwarded by the measurement module to a recipient, in particular a communication module.

## Revendications

1. Procédé de précontrainte d'un transporteur à chaîne (1) avec un brin de chaîne (4) qui est dévié par le biais d'au moins une roue de chaîne (2, 3), dans lequel au moins un module de mesure (20) est intégré dans le brin de chaîne (4), lequel transmet des données sans fil à un dispositif de communication (14, 16) agencé en dehors du brin de chaîne (4), dans lequel la force de précontrainte est réglée en fonction des données collectées par le module de mesure (20) et transmises sans fil, **caractérisé en ce que** le module de mesure (20) est une jauge de contrainte, dont les valeurs sont transmises sans fil au dispositif de communication (14, 16), dans lequel le module de mesure (20) se trouve dans un mode de veille profonde et peut être activé par un signal dans un mode d'enregistrement ou mode de mesure et le mode d'enregistrement est désactivé à la fin du signal d'activation ou après une fenêtre de temps ou par un signal de désactivation et le module de mesure (20) passe de nouveau dans le mode de veille profonde.

2. Procédé selon la revendication 1, **caractérisé en ce que** la mesure est réalisée périodiquement ou en continu ou selon les besoins.

3. Procédé selon la revendication 1 ou 2, **caractérisé en ce que** le module de mesure (20) est activable par radio.

4. Procédé selon l'une quelconque des revendications précédentes, **caractérisé en ce que** le signal d'activation se trouve à proximité immédiate de la roue de chaîne (2, 3) de telle manière que la mesure soit réalisée directement après avoir quitté le brin de chaîne (4) de la roue de chaîne (2, 3).

5. Procédé selon l'une quelconque des revendications 1 à 4, **caractérisé en ce qu'**au moins une mesure est réalisée après chaque circulation de chaîne du module de mesure (20).

6. Procédé selon l'une quelconque des revendications 1 à 5, **caractérisé en ce que** les valeurs de mesure sont utilisées afin de régler la force de précontrainte ou que les valeurs de mesure sont utilisées directement comme grandeur de régulation afin de réguler la force de précontrainte.

7. Procédé selon l'une quelconque des revendications 1 à 6, **caractérisé en ce que** les valeurs de mesure sont envoyées par le module de mesure (20) à d'autres récepteurs ou que les valeurs de mesure sont transmises par le dispositif de communication (14, 15) aux autres récepteurs.

8. Procédé selon l'une quelconque des revendications 1 à 7, **caractérisé en ce qu'**un répétiteur (22) reçoit les données du module de mesure (20) et les transmet sans fil à un autre récepteur, en particulier à un dispositif de communication (14, 16).

9. Procédé selon l'une quelconque des revendications 1 à 8, **caractérisé en ce que** le module de mesure (20) mesure des données brutes et dispose d'un dispositif de traitement et/ou d'une possibilité de filtration de telle manière que la quantité des données brutes soit nettement réduite et les données réduites soient transmises ensuite par le module de mesure à un récepteur, en particulier un module de communication.
